# EUROPÄISCHE PATENTANMELDUNG

(11) **EP 3 907 878 A1**
(43) Veröffentlichungstag der Anmeldung: **10.11.2021**
(21) Anmeldenummer: 20173618.8
(22) Anmeldetag: 08.05.2020
(51) Int. Cl.: H02P 23/14, G01R 31/34, G05B 23/02

(54) **ANORDNUNG UND VERFAHREN ZUR BETRIEBSVERHALTENSERMITTLUNG EINER ELEKTRISCHEN ROTATORISCHEN MASCHINE**

(71) Anmelder: Siemens Aktiengesellschaft, 80333 München (DE)
(72) Erfinder: Deeg, Christian, 90518 Altdorf (DE)

(57) **Zusammenfassung**

Die Erfindung betrifft eine Anordnung zur Betriebsverhaltensermittlung einer an eine Betriebsspannung angeschlossenen elektrischen rotatorischen Maschine (2), wobei die Anordnung (3) eine Sensorvorrichtung (4) und eine Recheneinrichtung (5, 6,8,9) umfasst, wobei
die Sensorvorrichtung (4) dazu ausgebildet ist, ein Streumagnetfeld außerhalb der Maschine (2) zu erfassen und aus dem erfassten Streumagnetfeld eine Schlupffrequenz (f₂) und eine Synchronfrequenz (f₁) zu berechnen, wobei auf der Recheneinrichtung (5,6,8,9) ein vorbestimmte maschinenspezifische Parameter (R₁, X₁, R_{fe}, Xₕ, R'₂, X'₂, R_{zus}) aufweisendes erweitertes Ersatzschaltbild gespeichert ist und die Recheneinrichtung (5,6,8,9) dazu konfiguriert ist, anhand der berechneten Schlupf- (f₂) und Synchronfrequenz (f₁) einen Schlupf (s) und anschließend mittels des erweiterten Ersatzschaltbildes das Betriebsverhalten der Maschine (2) zu ermitteln.

## Beschreibung

Die Erfindung betrifft eine Anordnung zur Betriebsverhaltensermittlung einer an eine Betriebsspannung angeschlossenen elektrischen rotatorischen Maschine, insbesondere einer Asynchronmaschine, wobei die Anordnung eine Sensorvorrichtung und eine Recheneinrichtung umfasst.

Des Weiteren betrifft die Erfindung ein Verfahren zur Betriebsverhaltensermittlung einer an eine Betriebsspannung angeschlossenen elektrischen rotatorischen Maschine.

Darüber hinaus betrifft die Erfindung ein Computerprogramm, umfassend Befehle, die bei der Ausführung des Programms bewirken, dass eine Anordnung der oben genannten Art ein Verfahren der oben genannten Art ausführt.

Außerdem betrifft die Erfindung ein computerlesbares Medium, beispielsweise ein flüchtiges oder nicht flüchtiges Speichermedium mit einem Computerprogramm der oben genannten Art.

Obendrein betrifft die Erfindung ein System umfassend eine elektrische rotatorische Maschine und eine Anordnung der oben genannten Art.

Im Zuge der fortschreitenden Digitalisierung in der industriellen Antriebstechnik treten vermehrt IoT-Geräte, z.B. IoT-Sensorvorrichtungen, in den Vordergrund, welche Zustandsgrößen (Temperatur, Schwingung, Drehzahl etc.) von Anlageneinheiten, z.B. Asynchronmaschinen, erfassen und zur Weiterverarbeitung übermitteln. Um diese Geräte, z.B. IoT-Geräte, kostengünstig und robust auszuführen, wird häufig auf externe Sensoren verzichtet, sodass bestimmte interessierende Größen nicht direkt gemessen werden können. So können z.B. bei Asynchronmaschinen im Falle einer Betriebspunktermittlung (z.B. Drehmoment, Leistung) lediglich eine Synchronfrequenz und eine Schlupffrequenz der magnetischen Streufeldgrößen als Bestimmungsbasis zur Verfügung stehen. Üblicherweise wird aus Schlupffrequenz, Synchronfrequenz, Nenndrehmoment und Nenndrehzahl der aktuelle Betriebspunkt durch lineare Inter- oder Extrapolation ermittelt. Dieses Verfahren ist beschränkt auf Aussagen zu Drehmoment und Leistung. Der durch die Linearisierung entstehende Fehler liegt - je nach Größe/-Auslegung der elektrischen Maschine - typischerweise zwischen 5% und 10% oder 15% (manchmal deutlich darüber). Somit ist das Verfahren zu ungenau.

Die Aufgabe der vorliegenden Erfindung kann somit darin gesehen werden, Verfahren und Systeme bereitzustellen, die eine verbesserte Betriebsverhaltensermittlung bei elektrischen rotatorischen Maschinen ermöglichen.

Die Aufgabe wird mit einer Anordnung der oben genannten Art erfindungsgemäß dadurch gelöst, dass die Sensorvorrichtung dazu ausgebildet ist, ein Streumagnetfeld außerhalb der Maschine zu erfassen und aus dem erfassten Streumagnetfeld eine Schlupffrequenz f₂ und eine Synchronfrequenz f₁ bzw. Synchrondrehzahl zu berechnen, wobei auf der Recheneinrichtung ein vorbestimmte maschinenspezifische Parameter R₁, X₁, R_{fe}, Xₕ, R'₂, X'₂, R_{zus} aufweisendes erweitertes Ersatzschaltbild gespeichert ist und die Recheneinrichtung dazu konfiguriert ist, anhand der berechneten Schlupf- f₂ und Synchrondrehzahl f₁ einen Schlupf s und anschließend mittels des erweiterten Ersatzschaltbildes das Betriebsverhalten der Maschine zu ermitteln.

Im Zusammenhang mit der vorliegenden Erfindung wird unter dem Begriff "an eine Betriebsspannung angeschlossen" ein Zustand der elektrischen rotatorischen Maschine verstanden, in dem die Maschine an eine in Höhe und Frequenz festen (starres Netz) oder veränderlichen (Umrichterbetrieb) Betriebsspannung angeschlossen ist.

Vorzugsweise ist das Steuerverfahren des Umrichters bekannt, womit die unbekannte Umrichterausgangsspannung aus der sensorisch ermittelten Frequenz f₁ bestimmt werden kann.

Es kann zweckmäßig sein, wenn die Recheneinrichtung eine erste und eine zweite Recheneinheit aufweist, wobei das erweiterte Ersatzschaltbild auf der ersten Recheneinheit gespeichert ist.

Weiters kann mit Vorteil vorgesehen sein, dass die erste Recheneinheit von der zweiten Recheneinheit baulich getrennt ausgebildet ist und die Sensorvorrichtung die erste Recheneinheit umfasst.

Bei einer Ausführungsform kann vorteilhaft sein, wenn die Recheneinrichtung ferner eine Cloud-Recheneinheit, insbesondere einen Cloud-Server umfasst.

Cloud-Recheneinheit kann insbesondere als ein Cloud-Server ausgebildet sein und über eine Funkverbindung, insbesondere über eine Internet-Funkverbindung mit der ersten und/oder zweiten Recheneinheit und/oder mit der Sensorvorrichtung verbunden sein.

Außerdem kann es zweckdienlich sein, wenn zumindest einer der vorbestimmten maschinenspezifischen Parameter ein Zusatzverluste charakterisierender Zusatzwiderstand R_{zus} ist. Auf diese Weise können die Zusatzverluste in dem erweiterten Ersatzschaltbild und somit bei der Ermittlung des Betriebspunktes mitberücksichtigt werden. Dies kann die Genauigkeit der Ermittlung erhöhen.

Obendrein kann es vorteilhaft sein, wenn die Recheneinrichtung ferner eine Anzeigevorrichtung umfasst, die dazu konfiguriert ist, das Betriebsverhalten der Maschine zu visualisieren.

Die Aufgabe der Erfindung wird auch mit einem Verfahren der oben genannten Art erfindungsgemäß dadurch gelöst, dass
A) ein Streumagnetfeld außerhalb der Maschine (während des Betriebs der Maschine) erfasst wird,
B) aus dem erfassten Streumagnetfeld eine Schlupffrequenz f₂ und eine Synchrondrehzahl f₁ berechnet werden,
C) aus der Schlupffrequenz f₂ und der Synchronfrequenz/Synchrondrehzahl f₁ ein Schlupf s berechnet wird,
D) der Schlupf s, die Synchronfrequenz f₁ und vorbestimmte maschinenspezifische Parameter R₁, X₁, R_{fe}, Xₕ, R'₂, X'₂, R_{zus} zur Ermittlung eines Betriebsverhaltens der Maschine mittels eines erweiterten Ersatzschaltbildes der Maschine verwendet werden.

In anderen Worten: der Schlupf s, die Synchronfrequenz f₁ und vorbestimmte maschinenspezifische Parameter R₁, X₁, R_{fe}, Xₕ, R'₂, X'₂, R_{zus} werden als Eingabegrößen für das erweiterte Ersatzschaltbild verwendet werden, mit welchem Ersatzschaltbild das Betriebsverhalten berechnet wird.

Bei Ermittlung des Betriebsverhaltens kann/können beispielsweise ein Drehmoment und/oder eine Leistung, z.B. mechanische Wellenleistung und/oder ein Leistungsfaktor und/oder ein Wirkungsgrad ermittelt werden.

Darüber hinaus kann mit Vorteil vorgesehen sein, dass die vorbestimmten maschinenspezifischen Parameter R₁, X₁, R_{fe}, Xₕ, R'₂, X'₂, R_{zus} einen Zusatzverluste charakterisierenden Zusatzwiderstand R_{zus} umfassen.

Außerdem kann es zweckdienlich sein, wenn aus dem ermittelten Betriebsverhalten ein Betriebspunkt der Maschine ermittelt wird.

Weitere Vorteile können sich ergeben, wenn das ermittelte Betriebsverhalten der Maschine visualisiert wird.

Bei einer Ausführungsform kann vorgesehen sein, dass das erweiterte Ersatzschaltbild an jenen Ort übertragen wird, an dem das Streumagnetfeld gemessen wird, um dort beispielsweise zumindest zwischengespeichert zu werden, und die Schritte A bis D an der Maschine ausgeführt werden.

Darüber hinaus kann vorgesehen sein, dass die Schritte A bis C an der Maschine (z.B. in einer an der Maschine angeordneten Sensorvorrichtung) ausgeführt werden, der Schlupf s und die Synchronfrequenz f₁ in eine Cloud gesendet werden und der Schritt D in der Cloud ausgeführt wird.

Es ist auch denkbar, dass Schritte A und B an der Maschine (z.B. in einer an der Maschine angeordneten Sensorvorrichtung) und Schritte C und D in der Cloud ausgeführt werden.

Außerdem wird die Aufgabe mit einem System der oben genannten Art erfindungsgemäß dadurch gelöst, dass die Maschine ein Maschinengehäuse umfasst, wobei die Sensorvorrichtung an einer Außenseite des Maschinengehäuses angeordnet, insbesondere befestigt ist, wobei die Sensorvorrichtung vorzugsweise als eine IIoT-Sensorvorrichtung ausgebildet ist.

Im Folgenden wird die Erfindung anhand der in den Figuren dargestellten Ausführungsbeispiele näher beschrieben und erläutert. Es zeigen:
- FIG 1: ein System aus einer Asynchronmaschine und IIoT-Infrastruktur,
- FIG 2: ein erweitertes Ersatzschaltbild, und
- FIG 3: Ablaufdiagramm eines Verfahrens.

In den Ausführungsbeispielen und Figuren können gleiche oder gleich wirkende Elemente jeweils mit den gleichen Bezugszeichen versehen sein.

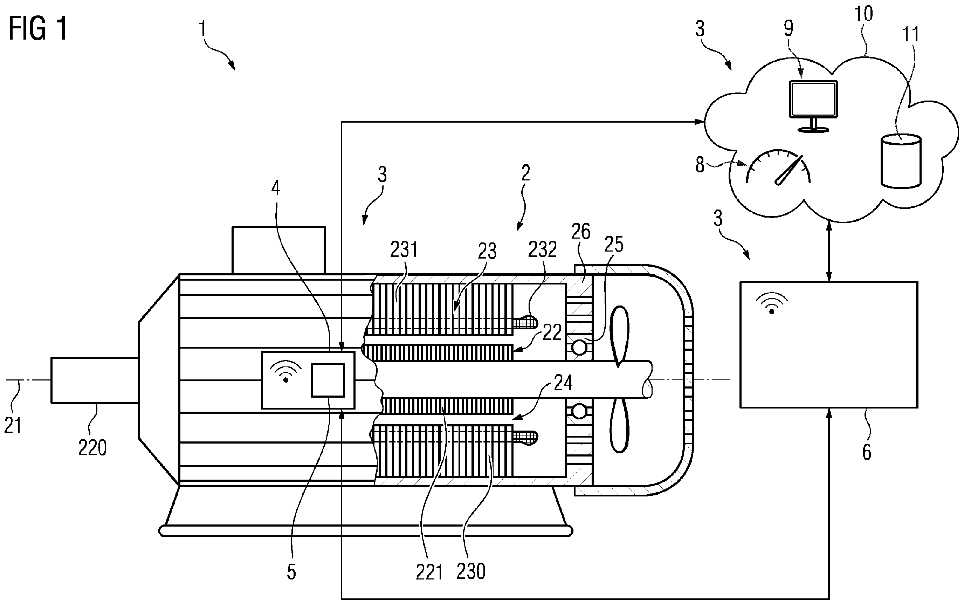

Zunächst wird auf FIG 1 Bezug genommen. Diese zeigt schematisch ein System 1, das eine elektrische rotatorische Maschine 2 und eine Anordnung 3 zur Ermittlung des Betriebsverhaltens der Maschine 2 umfasst. Die Maschine 2 kann an eine Betriebsspannung angeschlossen und im Betrieb sein. Die Maschine 2 ist als eine Asynchronmaschine, z.B. als ein Asynchronmotor oder -generator ausgebildet und weist einen um eine Rotationsachse 21 rotierbaren Rotor 22 und einen den Rotor 22 umgebenden Stator 23 auf, wobei sich zwischen dem Rotor 22 und dem Stator 23 ein Spalt 24, der insbesondere als Luftspalt ausgeführt ist, befindet. Die Rotationsachse 21 definiert eine Axialrichtung und eine Radialrichtung. Der Rotor 22 umfasst eine Welle 220 und ein Rotorblechpaket 221. Der Stator 23 umfasst ein Statorblechpaket 230 mit Statorwicklungen 231, wobei das Statorblechpaket 230 aus einer Vielzahl von geschichteten Elektroblechen aufgebaut ist. Die Statorwicklungen 231 verlaufen in Axialrichtung durch das Statorblechpaket 230 und bilden an den axialen Enden des Statorblechpakets 230 Wickelköpfe 232 aus. Die Welle 220 des Rotors 22 ist über Lager 25 gelagert. Der Rotor 22 und der Stator 23 sind in einem geschlossenen Maschinengehäuse 26 untergebracht.

Die Anordnung 3 umfasst eine Sensorvorrichtung 4 und eine Recheneinrichtung 5, 6, 8, 9. Die Recheneinrichtung 5, 6, 8, 9 kann generell Hard- und/oder Softwarekomponenten umfassen. Beispielsweise kann sie eine erste 5 und eine zweite Hardwarekomponente 6, eine Anzeigevorrichtung 8 und eine Cloud-Recheneinheit 9 umfassen.

Die Hardwarekomponenten 5, 6, die Anzeigevorrichtung 8 und die Cloud-Recheneinheit 9 können alle voneinander baulich getrennt ausgebildet sein. Die Sensorvorrichtung 4, die erste Hardwarekomponente 5 und zweite Hardwarekomponente 6 können eine (z.B. beidseitige, vorzugsweise funkbasierte) Datenverbindung zu einer Cloud, z.B. zu der Cloud-Recheneinheit 9 aufweisen. Die zweite Hardwarekomponente 6 kann beispielsweise als ein mobiles Gerät, z.B. als ein Handheld, wie ein Smartphone oder ein Tablet, ausgebildet sein. Die Anzeigevorrichtung 8 kann bspw. als ein Dashboard ausgebildet sein.

Die erste Hardwarekomponente 5 kann in der Sensorvorrichtung 4 angeordnet sein. Die Sensorvorrichtung 4 und/oder die erste Hardwarekomponente 5 kann über eine (z.B. beidseitige) Funkverbindung mit der zweiten Hardwarekomponente 6 zwecks Datenübertragung verbindbar sein.

Die Sensorvorrichtung 4 kann als eine Industrial Internet of Things (IIoT) Sensorvorrichtung (IIoT-Gerät) ausgebildet sein und ist an dem Maschinengehäuse 26 befestigt und weist im Vergleich zu der Maschine 2 kleine Maße auf. Beispielsweise ist die Sensorvorrichtung 4 in etwa fünf bis zehn Mal kleiner als die Maschine 2 (siehe FIG 1). Die Maschine 2 kann als eine rippengekühlte Asynchronmaschine ausgeführt sein, wobei die Sensorvorrichtung 4 an den Kühlrippen der Asynchronmaschine befestigt sein kann.

Die Sensorvorrichtung 4 ist dazu ausgebildet, ein Streumagnetfeld außerhalb der Maschine 2 zu erfassen und aus dem erfassten Streumagnetfeld eine Schlupffrequenz f₂ und eine Synchronfrequenz f₁ zu berechnen. Die Messung kann beispielsweise mit einer zu diesem Zweck vorgesehenen Spule innerhalb des Sensorvorrichtungsgehäuses erfolgen. Das an der Spule gemessene Signal kann besser bandbreitenbegrenzt werden. Dies bringt weitere Vorteile für eine anschließende Abtastung bei der A/D-Wandlung. Die Messung kann auch mittels eines innerhalb des Sensorvorrichtungsgehäuses Chipsensors erfolgen. Der Chipsensor kann preiswerter als die Spule sein. Die Berechnung der Schlupf- f₂ und der Synchronfrequenz f₁ kann beispielsweise mittels der ersten Hardwarekomponente 5 oder der zweiten Hardwarekomponente 6, insbesondere in der Cloud, z. B. auf der Cloud-Recheneinheit 9 erfolgen. Beispielsweise kann die vorgenannte Berechnung der Frequenzen aus dem erfassten Magnetstreufeld mit Hilfe digitaler Signalverarbeitung, insbesondere mit einer FFT und/oder mit einem Frequenzzählverfahren erfolgen.

An dieser Stelle sei betont, dass die Sensorvorrichtung 4 an keine Maschinensensoren innerhalb (oder auch außerhalb) der Maschine 2 angebunden sein muss. Denkbar ist es, dass die Sensorvorrichtung 4 an weitere Sensoren (die jedoch nicht mit einer Magnetfeldmessung in Verbindung stehen) vorzugsweise funkbasiert, z.B. per Bluetooth, angebunden wird, z.B. zwecks Temperatur- und/oder Schwingungsmessung. Für die hier beschriebene Betriebsverhaltensermittlung sind keine teuren und wartungsaufwändigen Sensoren notwendig, die beispielsweise Strom oder Spannung messen können. Daher ist sowohl die Anordnung 3 als auch die Sensorvorrichtung 4 sehr günstig und wartungsfreundlich. Dabei können/kann beispielsweise ein Drehmoment und/oder eine Leistung, z.B. mechanische Wellenleistung und/oder ein Leistungsfaktor und/oder ein Wirkungsgrad ermittelt werden.

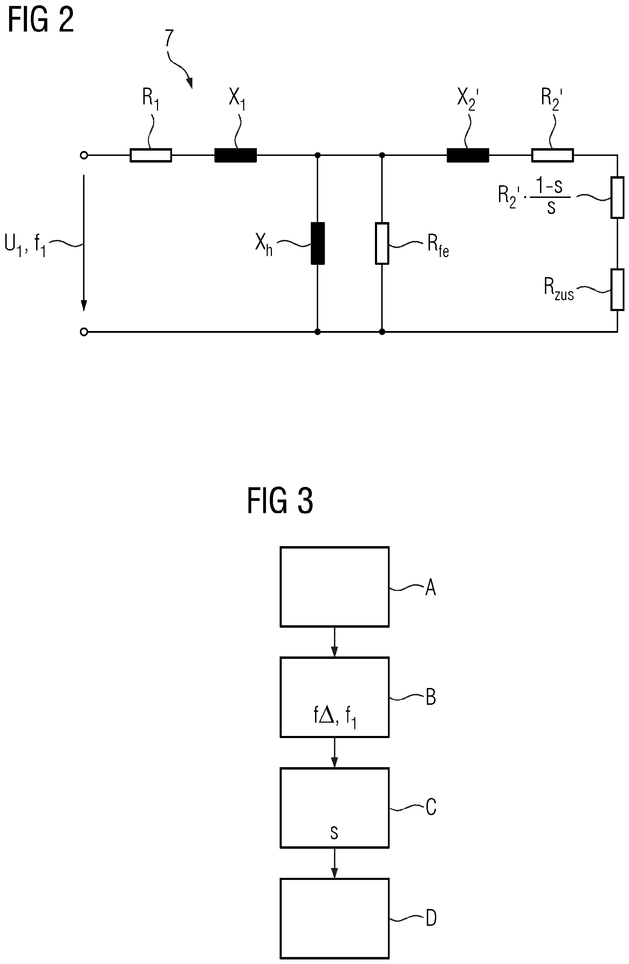

Auf der Recheneinrichtung 5, 6, 8, 9, insbesondere auf der ersten Hardwarekomponente 5 oder auf der Cloud-Recheneinheit 9, können vorbestimmte maschinenspezifische Parameter - Hauptinduktivität Xₕ (Hauptfluss), Ständer- X₁ und Läuferinduktivität X'₂ (Streuflüsse), Läuferwiderstand R'₂ (Rotorwicklungsverluste), Ständerwiderstand R₁ (Statorwicklungsverluste), R_{fe} (Eisenverluste) und R_{zus} (Zusatzverluste) - aufweisendes erweitertes Ersatzschaltbild 7 hinterlegt sein (siehe FIG 2). Die Recheneinrichtung 5, 6, 8, 9 ist dazu konfiguriert, anhand der berechneten Schlupf- f₂ und Synchronfrequenz f₁ einen Schlupf s und anschließend mittels des erweiterten Ersatzschaltbildes 7 das Betriebsverhalten der Maschine 2 zu ermitteln. Dabei werden die Parameter, der Schlupf s, die Synchrondrehzahl f₁ und eine Spannung U₁ als Eingabegrößen für das erweiterte Ersatzschaltbild 7 verwendet und das Betriebsverhalten gerechnet.

Das erweiterte Ersatzschaltbild 7 kann beispielsweise auf der ersten Hardwarekomponente 5 hinterlegt sein und somit - wenn die erste Hardwarekomponente 5 ein Teil der Sensorvorrichtung 4 ist - auf der Sensorvorrichtung 4 gespeichert sein.

Wenn das Ersatzschaltbild 7 nicht auf der ersten Hardwarekomponente 5 hinterlegt ist, kann es beispielsweise mittels der zweiten Hardwarekomponente 6 aus der Cloud 10, z.B. von der Cloud-Recheneinheit 9 oder von einer Cloud-Datenbank 11 heruntergeladen und auf die erste Hardwarekomponente 5 übermittelt werden. In diesem Fall kann es zweckdienlich sein, wenn Schritt D z.B. auf der Hardwarekomponente 5 ausgeführt wird.

Wie bereits erwähnt, kann ein der vorbestimmten maschinenspezifischen Parameter ein Zusatzverluste charakterisierender Zusatzwiderstand R_{zus} sein. Auf diese Weise werden die Zusatzverluste bei der Ermittlung des Betriebspunktes mitberücksichtigt. Dadurch kann beispielsweise bei normgerechter Berücksichtigung der Zusatzverluste deren Rückwirkung auf die per Ersatzschaltbild ermittelten Betriebsgrößen erfasst werden.

Die Anzeigevorrichtung 8, z.B. Dashboard kann dazu konfiguriert sein, das ermittelte Betriebsverhalten der Maschine 2 zu visualisieren. Die Anzeigevorrichtung 8 kann beispielsweise in der Cloud (FIG 1) angeordnet oder an die Cloud angebunden sein.

FIG 3 zeigt eine Ausführungsform eines Verfahrens zur Betriebsverhaltensermittlung einer an eine Betriebsspannung angeschlossenen elektrischen rotatorischen Maschine 2 während ihres Betriebs.

In Schritt A wird ein Streumagnetfeld außerhalb der Maschine 2 erfasst. Dies kann mit z.B. mit der vorgenannten Sensorvorrichtung 4 erfolgen. Aus dem erfassten Streumagnetfeld werden eine Schlupffrequenz f₂ und eine Synchronfrequenz f₁ berechnet (Schritt B), aus welchen in Schritt C ein Schlupf s berechnet wird. Der Schlupf s, die Synchrondrehzahl f₁ und vorbestimmte maschinenspezifische Parameter R₁, X₁, R_{fe}, Xₕ, R'₂, X'₂, R_{zus} zur Ermittlung eines Betriebsverhaltens der Maschine 2 mittels eines erweiterten Ersatzschaltbildes der Maschine 2 verwendet werden. Die Parameter und das Ersatzschaltbild können die im Zusammenhang mit FIG 1 und 2 besprochenen Parameter R₁, X₁, R_{fe}, Xₕ, R'₂, X'₂, R_{zus} und das Ersatzschaltbild 7 sein.

Z.B. umfassen die Parameter den die Zusatzverluste charakterisierenden Zusatzwiderstand R_{zus}.

Aus dem ermittelten Betriebsverhalten kann ein Betriebspunkt der Maschine 2 ermittelt werden.

Vor der Messung des Magnetstreufeldes kann das erweiterte Ersatzschaltbild 7 an die Sensorvorrichtung 4 oder an die erste Hardwarekomponente 5 übertragen werden, um dort - beispielsweise in einem flüchtigen oder nichtflüchtigen Speicher - zumindest zwischengespeichert zu werden. Hierdurch kann z.B. der Datenverkehr optimiert werden.

Außerdem können z.B. die vorgenannten Schritte A und B oder A, B und C an der Maschine 2, in der Sensorvorrichtung 4, z.B. mittels der ersten Hardwarekomponente 5, ausgeführt werden, wobei der Schlupf s und die Synchronfrequenz f₁ z.B. über die zweite Hardwarekomponente 6 oder auf direktem Weg in die Cloud 10 z.B. an die Cloud-Recheneinheit oder in die Cloud-Datenbank 11 gesendet werden, sodass die Schritte C und D oder der Schritt D in der Cloud 10 ausgeführt werden können oder kann.

Das Ersatzschaltbild 7 enthält aus Sicht des Maschinenherstellers empfindliche Daten, wodurch das Ermitteln des Betriebsverhaltens in der Cloud 10 aus Sicherheitsgründen bevorzugt werden kann.

Weiterhin kann die Recheneinrichtung ein Computerprogramm umfassen, das Befehle aufweist, die bei der Ausführung des Programms durch die Recheneinrichtung bewirken, dass diese das vorgenannte Verfahren ausführt. Das Computerprogramm kann beispielsweise auf der Cloud-Recheneinheit 9 und/oder auf der ersten Hardwarekomponente 5 und/oder auf der zweiten Hardwarekomponente 6 gespeichert sein und mehrere über unterschiedliche Recheneinheiten verteilte, zusammenwirkende und korreliert oder unabhängig voneinander ausführbare Module umfassen kann.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können das beschriebene Systeme und die beschriebene Anordnung durch Merkmale verbessert werden, die in Bezug auf das Verfahren beschrieben oder beansprucht wurden und *vice versa.*

## Patentansprüche

1. Anordnung zur Betriebsverhaltensermittlung einer an eine Betriebsspannung angeschlossenen elektrischen rotatorischen Maschine (2), wobei die Anordnung (3) eine Sensorvorrichtung (4) und eine Recheneinrichtung (5,6,8,9) umfasst, wobei
die Sensorvorrichtung (4) dazu ausgebildet ist, ein Streumagnetfeld außerhalb der Maschine (2) zu erfassen und aus dem erfassten Streumagnetfeld eine Schlupffrequenz (f₂) und eine Synchronfrequenz (f₁) zu berechnen, wobei
auf der Recheneinrichtung (5,6,8,9) ein vorbestimmte maschinenspezifische Parameter (R₁, X₁, R_{fe}, Xₕ, R'₂, X'₂, R_{zus}) aufweisendes erweitertes Ersatzschaltbild gespeichert ist und
die Recheneinrichtung (5,6,8,9) dazu konfiguriert ist, anhand der berechneten Schlupf- (f₂) und Synchronfrequenz (f1) einen Schlupf (s) und anschließend mittels des erweiterten Ersatzschaltbildes das Betriebsverhalten der Maschine (2) zu ermitteln.

2. Anordnung nach Anspruch 1, wobei die Recheneinrichtung eine erste (5) und eine zweite Recheneinheit (6) aufweist, wobei das erweiterte Ersatzschaltbild auf der ersten Recheneinheit (5) gespeichert ist.

3. Anordnung nach Anspruch 2, wobei die erste Recheneinheit (5) von der zweiten Recheneinheit (6) baulich getrennt ausgebildet ist und die Sensorvorrichtung (4) die erste Recheneinheit (5) umfasst.

4. Anordnung nach einem der Ansprüche 1 bis 3, wobei die Recheneinrichtung ferner eine Cloud-Recheneinheit (9), insbesondere einen Cloud-Server umfasst.

5. Anordnung nach einem der Ansprüche 1 bis 4, wobei zumindest ein der vorbestimmten maschinenspezifischen Parameter (R₁, X₁, R_{fe}, Xₕ, R'₂, X'₂, R_{zus}) ein Zusatzverluste charakterisierender Zusatzwiderstand (R_{zus}) ist.

6. Anordnung nach einem der Ansprüche 1 bis 5, wobei die Recheneinrichtung ferner eine Anzeigevorrichtung (8) umfasst, die dazu konfiguriert ist, das Betriebsverhalten der Maschine (2) zu visualisieren.

7. Verfahren zur Betriebsverhaltensermittlung einer an eine Betriebsspannung angeschlossenen elektrischen rotatorischen Maschine (2), wobei
A) ein Streumagnetfeld außerhalb der Maschine (2) erfasst wird,
B) aus dem erfassten Streumagnetfeld eine Schlupffrequenz (f₂) und eine Synchronfrequenz (f₁) berechnet werden,
C) aus der Schlupffrequenz (f₂) und der Synchronfrequenz (f1) ein Schlupf (s) berechnet wird,
D) der Schlupf (s), die Synchronfrequenz (f₁) und vorbestimmte maschinenspezifische Parameter (R₁, X₁, R_{fe}, Xₕ, R'₂, X'₂, R_{zus}) zur Ermittlung eines Betriebsverhaltens der Maschine (2) mittels eines erweiterten Ersatzschaltbildes der Maschine (2) verwendet werden.

8. Verfahren nach Anspruch 7, wobei die vorbestimmten maschinenspezifischen Parameter (R₁, X₁, R_{fe}, Xₕ, R'₂, X'₂, R_{zus}) einen Zusatzverluste charakterisierenden Zusatzwiderstand (R_{zus}) umfassen.

9. Verfahren nach Anspruch 7 oder 8, wobei aus dem ermittelten Betriebsverhalten ein Betriebspunkt der Maschine (2) ermittelt wird.

10. Verfahren nach einem der Ansprüche 7 bis 9, wobei das ermittelte Betriebsverhalten der Maschine (2) visualisiert wird.

11. Verfahren nach einem der Ansprüche 7 bis 10, wobei das erweiterte Ersatzschaltbild an jenen Ort übertragen wird, an dem das Streumagnetfeld gemessen wird, und die Schritte A bis D an der Maschine (2) ausgeführt werden.

12. Verfahren nach einem der Ansprüche 7 bis 10, wobei die Schritte A und B oder A, B und C an der Maschine (2) ausgeführt werden, der Schlupf (s) und die Synchronfrequenz (f₁) in eine Cloud gesendet werden, sodass die Schritte C und D beziehungsweise der Schritt D in der Cloud ausgeführt werden beziehungsweise wird.

13. Computerprogramm, umfassend Befehle, die bei der Ausführung des Programms bewirken, dass eine Anordnung nach einem der Ansprüche 1 bis 6 ein Verfahren nach einem der Ansprüche 7 bis 12 ausführt.

14. Computerlesbares Medium mit einem Computerprogramm nach Anspruch 13.

15. System (1) umfassend eine elektrische rotatorische Maschine (2) und eine Anordnung (3) nach einem der Ansprüche 1 bis 6, wobei die Maschine (2) ein Maschinengehäuse (26) umfasst, wobei die Sensorvorrichtung (4) an einer Außenseite des Maschinengehäuses (26) angeordnet, insbesondere befestigt ist, wobei die Sensorvorrichtung (4) vorzugsweise als eine IIoT-Sensorvorrichtung ausgebildet ist.
